# EUROPÄISCHE PATENTSCHRIFT

(11) **EP 2 500 614 B1**
(45) Veröffentlichungstag und Bekanntmachung des Hinweises auf die Patenterteilung: **23.01.2013**
(21) Anmeldenummer: 11002207.6
(22) Anmeldetag: 17.03.2011
(51) Int. Cl.: F16L 55/26

(54) **Kamera bestücktes selbstfahrendes Fahrzeug**
Self-propelled vehicle fitted with a camera
Véhicule automobile équipé d'une caméra

(43) Veröffentlichungstag der Anmeldung: 19.09.2012
(73) Patentinhaber: Schwalm, Martin, 36251 Bad Hersfeld/ Asbach (DE)
(72) Erfinder: Schwalm, Martin, 36251 Bad Hersfeld/ Asbach (DE)
(74) Vertreter: Walther, Walther & Hinz GbR

(56) Entgegenhaltungen:
- DE-A1- 19 640 698
- DE-A1-102008 015 442
- DE-C1- 10 123 558
- US-A1- 2007 276 552

## Beschreibung

Die Erfindung betrifft ein selbstfahrendes Kanalrohrfahrzeug, welches mit einer Kamera bestückt ist.

Aus der US 2007/276552 A1 ist eine selbstfahrende Vorrichtung bekannt, die in der Lage ist, z. B. Schiffsrümpfe oder Pipelines durch Verfahren, beispielsweise auf dem Meeresgrund zu begutachten. Die Vorrichtung zeigt eine um eine Achse verschwenkbare Kamera.

Die DE 101 23 558 C1 zeigt ein selbstfahrendes Kanalrohrfahrzeug gemäβ dem Oberbegriff des Anspruchs 1.

Aus dem Stand der Technik sind selbstfahrende Fahrzeuge für insbesondere ein Abwasserrohr bekannt, die schlussendlich zur Inspektion des Abwasserkanals dienen. Solche Fahrzeuge besitzen eine Kamera, mit denen das Innere des Abwasserrohrs oder Abwasserkanals gefilmt wird und in Echtzeit auf einen Monitor in einem Begleitfahrzeug übertragen wird.

Solche Fahrzeuge, die, wie bereits ausgeführt mit einer Kamera bestückt sind, dienen allerdings nicht nur der Inspektion der Kanäle, sondern durchaus auch der Reparatur. Häuser werden an das öffentliche Abwasserrohrnetz (Kanalnetz) derart angeschlossen, dass in das Abwasserrohr ein sogenannter Abwasseranschlussstutzen oder Sattelstück des Hauses hineinragt. Nun stellt sich häufig das Problem der Dichtigkeit im Übergangsbereich zwischen dem Anschlussstutzen und dem Hauptrohr. Üblicherweise besteht das Hauptrohr aus Beton oder Steinzeug, sodass beim Ausfräsen einer entsprechenden Ausnehmung in das Rohr zur Aufnahme des Anschlussstutzens oder des Sattelstückes Undichtigkeiten auftreten können, die ggf. dazu führen, dass das in dem Rohr geführte Abwasser in das das Rohr umgebende Erdreich eindringen kann. Insofern ist bereits aus der DE 196 40 698 A1 bekannt, eine sogenannte Dichtmanschette in den Übergangsbereich zwischen Anschlussstutzen und Abwasserrohr einzusetzen. Eine solche Dichtmanschette besteht aus einem mit einem Kunstharz getränkten Glasfasergewebe, wobei die Vorrichtung zum Einsetzen der Dichtmanschette üblicherweise als Packer bezeichnet wird. Ein solcher Packer ist im Übrigen auch beispielsweise aus der DE 101 24 507 C2 bekannt. Der Packer selbst wird durch ein Fahrzeug an die entsprechende Stelle im Abwasserkanal oder Abwasserrohr gebracht, wo er dann abgesetzt wird, und das Anbringen der Dichtmanschette vornimmt.

Es wurde bereits darauf hingewiesen, dass dem Einsetzen der Dichtmanschette üblicherweise ein Fräsvorgang im Abwasserkanal vorausgeht. Ein solcher Fräsvorgang kann auch erforderlich sein, um in den Anschlussstutzen beispielsweise hineinragende Baumwurzeln abzufräsen oder auch sonstige Hindernisse im Rohr oder Kanal durch Fräsen zu beseitigen. Insofern ist auch bereits bekannt, das Fahrzeug mit einem Fräskopf zu bestücken, um eben solche Fräsvorgänge durchführen zu können. Damit der Fräser genau positioniert werden kann, ist die besagte Kamera erforderlich. Die Kamera befindet sich an dem Fahrzeug im Wesentlichen unterhalb des Fräsers. Das heißt, dass bei Betrieb des Fräskopfes das abgefräste Gut auch das Gehäuse der Kamera trifft. Das Gehäuse zur Aufnahme der Kamera besteht nach dem Stand der Technik aus drei Gehäuseteilen, und zwar zwei Seitenteilen, wobei durch die Seitenteile das mittlere Gehäuseteil aufgenommen ist, wobei das mittlere Gehäuseteil gegenüber den beiden Seitenteilen schwenk- oder drehbeweglich ist. Das mittlere Gehäuseteil ist mit der Kamera verbunden, sodass bei Verschwenkung oder bei Verdrehung des mittleren Gehäuseteils sich die Kamera mitdreht. Das heißt, es findet eine Relativbewegung des mittleren Gehäuseteils relativ zu den beiden äußeren Gehäuseteilen statt.

Während des Fräsvorgangs entstehen Frässpäne. Die Frässpäne gelangen, wie bereits ausgeführt, unmittelbar auf das Gehäuse der Kamera, was dazu führt, dass sich häufig die Späne in dem Spalt zwischen den Seitenteilen und dem relativ zu den Seitenteilen beweglichen Mittelteil absetzen, und dort zu einer Blockade der Bewegung des mittleren Teils des Gehäuses führen. Um die Funktionsfähigkeit der Kamera wiederherzustellen, ist dann erforderlich, dass das Fahrzeug aus dem Kanal heraus geholt wird, das Gehäuse zur Aufnahme der Kamera abgebaut, auseinandergenommen und gesäubert wird. Dass dies äußerst umständlich und zeitraubend und schlussendlich auch teuer ist, bedarf an dieser Stelle sicherlich keiner weiteren Erläuterung.

Die der Erfindung zugrunde liegende Aufgabe besteht zum einen darin, das Gehäuse zur Aufnahme der Kamera, und damit auch die Kamera, selbst weniger störanfällig auszugestalten.

Zur Lösung der Aufgabe dienen die Merkmale des Anspruchs 1. Hiernach ist vorgesehen, dass das Fahrzeug einen Halter mit zwei parallelen Armen aufweist, wobei durch die Arme ein Gehäuse zur Aufnahme der Kamera aufgenommen ist, wobei die Kamera zumindest um eine horizontale Achse verschwenkbar ist. Das Gehäuse für die Kamera ist durch den Halter feststehend aufgenommen, wobei die Kamera in dem Gehäuse relativ zum Gehäuse um eine horizontale Achse drehbar gelagert ist, wobei das Gehäuse im Bereich des Kameraobjektivs ein Fensterelement z. B. aus Glas oder durchsichtigem Kunststoff aufweist, wobei das Gehäuse eine Reinigungseinrichtung für das Fensterelement aufweist. Zwischen den Armen des Halters ist eine Aufnahme für einen Fräskopf angeordnet. Hieraus wird deutlich, dass sämtliche Teile des Gehäuses, das die Kamera aufnimmt, feststehend ausgebildet sind. Die Kamera selbst bewegt sich innerhalb des Gehäuses relativ zum Gehäuse um eine horizontale Achse, weshalb dann, wenn das Gehäuse dicht ist, die Funktionsfähigkeit der Kamera als solcher in keiner Weise durch äußere Einflüsse, wie z. B. Schmutz, behindert wird. Das Gehäuse weist im Bereich der Kamera eine Reinigungseinrichtung für die Reinigung des Fensterelementes ebenso auf, wie einen Anschluss für Kabel zur Energieversorgung und zur Bildübertragung. Die Reinigungseinrichtung kann hierbei als Wassersprühvorrichtung ausgebildet sein, die für die Reinigung des Fensterelementes sorgt.

Vorteilhafte Merkmale und Ausgestaltungen der Erfindung ergeben sich aus den Unteransprüchen.

So ist insbesondere vorgesehen, dass das Fensterelement ringförmig, insbesondere ringförmig umlaufend ausgebildet ist.

Die Kamera selbst hatte einen Schwenkwinkel von etwa 270°, sodass bei entsprechender Größe des Fensterelementes auch dieser Erfassungswinkel für die Betrachtung des Abwasserrohres oder Abwasserkanales tatsächlich zur Verfügung steht.

Im Einzelnen umfasst das Gehäuse zwei Gehäuseschenkel, durch die das ringförmige Fensterelement gehalten ist. Die Gehäuseschenkel selbst dienen der Aufnahme durch den Halter des selbstfahrenden Fahrzeugs; d. h. der Halter ist durch die Gehäuseschenkel mit dem Gehäuse verbunden.

Das Gehäuse zur Aufnahme der Kamera weist des Weiteren eine Kammer für die Kameraelektronik auf.

Für die Ausführung der Rotationsbewegung der Kamera ist in dem Gehäuse eine Antriebseinrichtung angeordnet. Die Antriebseinrichtung umfasst einen an der Kamera angeordneten Antriebsmotor, wobei der Antriebsmotor ein Antriebsritzel aufweist, das mit einem am Gehäuse angeordneten Zahnrad in Verbindung steht. Das Zahnrad ist hierbei in dem Gehäuse und hier insbesondere an einem der beiden Gehäuseschenkel feststehend angeordnet, wobei der Motor selbst Bestandteil der Kamera ist, wobei bei Antrieb des Motors bei entsprechender Rotation des Ritzels das Ritzel auf dem feststehenden Zahnrad kämmt. Hierbei rotiert oder verschwenkt dann die Kamera relativ zum Gehäuse. In diesem Zusammenhang ist ebenfalls vorgesehen, dass die Kamera in dem Gehäuse durch eine horizontal verlaufende Drehachse drehbar gehalten ist.

Nach einem weiteren Merkmal der Erfindung weist das Gehäuse eine Beleuchtungseinrichtung auf, wobei die Beleuchtungseinrichtung im Gehäuse angeordnet ist, um eine Verschmutzung der Beleuchtungseinrichtung durch Frässpäne und andere Abfälle zu vermeiden. Die Kamera weist insbesondere im Bereich ihres Objektivs die Beleuchtungseinrichtung auf, sodass die Möglichkeit besteht, die Beleuchtungseinrichtung parallel zum Objektiv auszurichten.

Anhand der Zeichnungen wird die Erfindung nachstehend beispielhaft näher erläutert.
- Fig. 1: zeigt das schematisch dargestellte Fahrzeug mit einem an dem Halter angeordneten Fräskopf sowie weiterhin einem an dem Halter angeordneten Kameragehäuse;
- Fig. 2: zeigt das Kameragehäuse in perspektivischer Darstellung;
- Fig. 2a: zeigt das Kameragehäuse in perspektivischer Darstellung, wobei der eine Gehäuseschenkel des Kameragehäuses abgenommen ist;
- Fig. 3: zeigt das ringförmige Fensterelement in einer Seitenansicht in perspektivischer Darstellung mit der Kamera;
- Fig. 4: zeigt eine andere Ansicht der Darstellung gemäß Fig. 3.

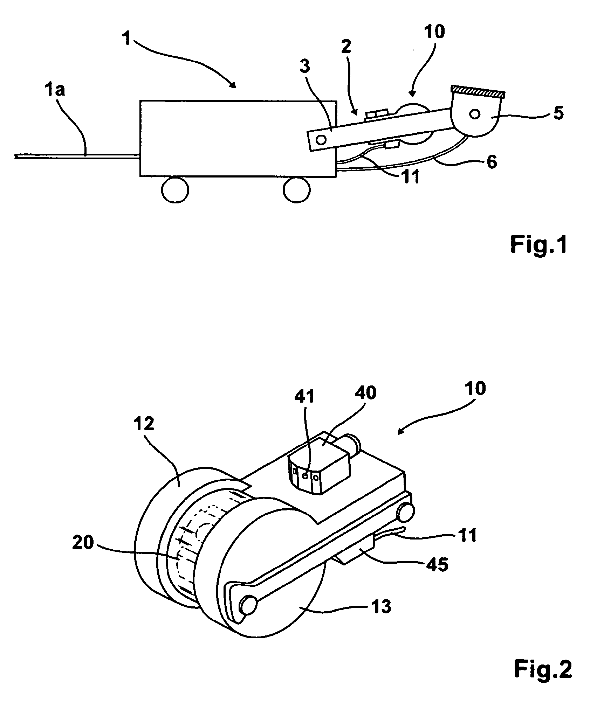

Das ist in Fig. 1 dargestellte Fahrzeug besitzt das Bezugszeichen 1. Das Fahrzeug 1 nimmt den Halter 2 auf, wobei der Halter 2 aus zwei parallelen Armen 3 ausgebildet ist, zwischen denen einerseits der mit 5 bezeichnete Fräskopf und andererseits das mit 10 bezeichnete Kameragehäuse angeordnet ist. Der Fräskopf 5 ist durch Kabel 6 mit dem Fahrzeug 1 verbunden. Gleiches gilt im Prinzip für das Kameragehäuse 10, das durch Kabel 11 mit dem Fahrzeug in Verbindung steht. Die Energieversorgung des Fahrzeugs 1 erfolgt durch Kabel 1a hinter dem Fahrzeug.

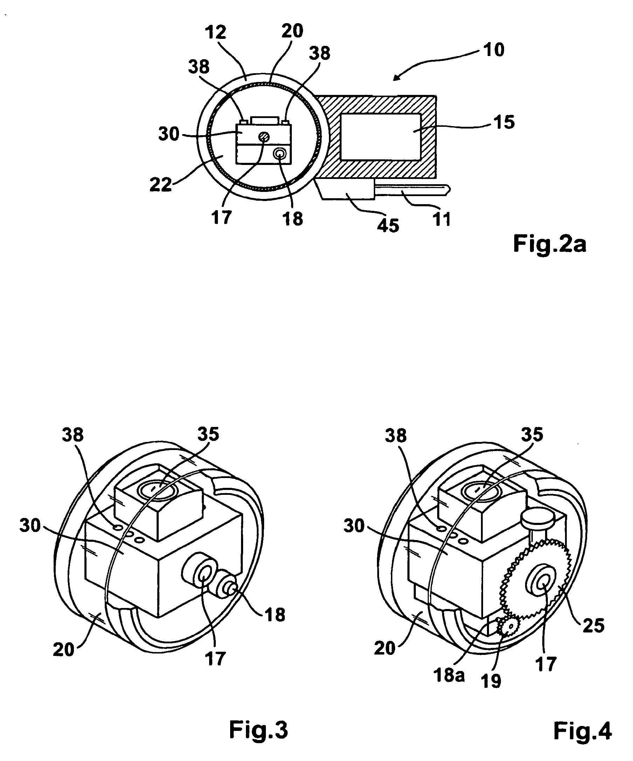

Aus der Darstellung gemäß Fig. 2 ergibt sich das Kameragehäuse 10. Das Kameragehäuse 10 umfasst die beiden Gehäuseschenkel 12 und 13, wobei zwischen den beiden Schenkeln 12 und 13 das ring- oder hülsenförmig ausgebildete Fensterelement 20 aus Glas oder durchsichtigem Kunststoff wasser- und staubdicht angeordnet ist. In dem durch die Gehäuseschenkel 12 und 13 sowie das hülsenförmige Fensterelement 20 gebildeten Raum 22 befindet sich die mit 30 bezeichnete Kamera. Das Gehäuse 10 umfasst darüber hinaus noch die Kammer 15, wobei in der Kammer 15 die Elektronik für die Kamera untergebracht ist. Die Kamera 30 ist in den beiden Gehäuseschenkeln 12 und 13 durch eine horizontale Schwenkachse 17 drehbeweglich gelagert, und ist hierdurch auf- und abschwenkbar im Gehäuse gelagert. Zum Verdrehen oder Verschwenken der Kamera zwischen den beiden Gehäuseschenkeln 12 und 13 dient ein an der Kamera angeordneter Motor 18, der durch eine Welle 18a mit dem Ritzel 19 in Verbindung steht. An dem Gehäuseschenkel 12 befindet sich das Zahnrad 25 (Fig. 4), wobei das Ritzel 19 auf dem Zahnrad 25 kämmt. Das heißt, bei Antrieb des Ritzels 19 durch den Motor 18 erfolgt eine Verdrehung der insgesamt mit 30 bezeichneten Kamera. Die Kamera besitzt das Objektiv 35, wobei im Bereich des Objektivs an der Kamera eine Beleuchtungseinrichtung 38 angeordnet ist. Die Beleuchtungseinrichtung 38 umfasst mehrere LED's.

Hieraus wird deutlich, dass die Kamera 30 innerhalb des Gehäuses relativ zum Gehäuse verdrehbar gelagert ist, wobei die Kamera 30 durch die Drehachse 17 durch die beiden Gehäuseschenkel 12 und 13 drehbar gehalten ist.

Auf dem Gehäuse 10 der Kamera befindet sich darüber hinaus eine Reinigungseinrichtung 40, die Sprühdüsen 41 zeigt, die auf das ringförmige Fensterelement 20 gerichtet sind. Auf der Unterseite des Gehäuses 10 ist das Kabelanschlussgehäuse 45 für die Kabel 11 angeordnet.

### Bezugszeichenliste:

- 1: Fahrzeug
- 1 a: Kabel
- 2: Halter
- 3: zwei parallele Arme
- 5: Fräskopf
- 6: Kabel
- 10: Gehäuse zur Aufnahme der Kamera
- 11: Kabel
- 12: Gehäuseschenkel
- 13: Gehäuseschenkel
- 15: Kammer
- 17: Achse
- 18: Motor
- 18a: Welle
- 19: Ritzel
- 20: Fensterelement
- 22: gebildeter Raum
- 25: Zahnrad
- 30: Kamera
- 35: Kameraobjektiv
- 38: Beleuchtungseinrichtung
- 40: Reinigungseinrichtung
- 41: Sprühdüsen
- 45: Kabelanschlussgehäuse

## Patentansprüche

1. Selbstfahrendes Kanalrohrfahrzeug (1), welches mit einer Kamera bestückt ist, wobei das Fahrzeug (1) einen Halter (2) mit zwei parallelen Armen (3) aufweist, wobei durch die Arme (3) ein Gehäuse (10) zur Aufnahme der Kamera (30) und ein Fräskopf aufgenommen ist, wobei die Kamera (30) zumindest um eine horizontale Achse verschwenkbar ist,
**dadurch gekennzeichnet, dass** das Gehäuse (10) durch den Halter (2) feststehend aufgenommen ist, wobei die Kamera (30) in dem Gehäuse (10) relativ zum Gehäuse um eine horizontale Achse (17) drehbar gelagert ist, w**o**bei das Gehäuse (10) im Bereich des Kameraobjektivs (35) ein Fensterelement (20) aufweist, und wobei das Gehäuse eine Reinigungseinrichtung (40) für das Fensterelement (20) aufweist.

2. Selbstfahrendes Kanalrohrfahrzeug (1) nach Anspruch 1,
**dadurch gekennzeichnet,**
**dass** das Fensterelement (20) ringförmig ausgebildet ist.

3. Selbstfahrendes Kanalrohrfahrzeug (1) nach Anspruch 1 oder 2,
**dadurch gekennzeichnet,**
**dass** das Gehäuse (10) zwei Gehäuseschenkel (12, 13) umfasst, durch die das ringförmige Fensterelement (20) gehalten ist.

4. Selbstfahrendes Kanalrohrfahrzeug (1) nach einem der voranstehenden Ansprüche,
**dadurch gekennzeichnet,**
**dass** das Gehäuse (10) eine Kammer (15) für die Kameraelektronik aufweist.

5. Selbstfahrendes Kanalrohrfahrzeug (1) nach einem der voranstehenden Ansprüche,
**dadurch gekennzeichnet,**
**dass** das Gehäuse (10) ein Kabelanschlussgehäuse (45) für Kabel (11) und ähnliches aufweist.

6. Selbstfahrendes Kanalrohrfahrzeug (1) nach einem der voranstehenden Ansprüche,
**dadurch gekennzeichnet,**
**dass** für die Rotationsbewegung der Kamera (30) in dem Gehäuse (10) eine Antriebseinrichtung (18, 18a, 19, 25) vorgesehen ist, die sich innerhalb des Gehäuses (10) befindet.

7. Selbstfahrendes Kanalrohrfahrzeug (1) nach Anspruch 6 ,
**dadurch gekennzeichnet,**
**dass** die Antriebseinrichtung einen Antriebsmotor (18) umfasst.

8. Selbstfahrendes Kanalrohrfahrzeug (1) nach Anspruch 7 ,
**dadurch gekennzeichnet,**
**dass** der Antriebsmotor (18) ein Ritzel (19) aufweist, das mit einem im Gehäuse (10) angeordneten Zahnrad (25) in Verbindung steht.

9. Selbstfahrendes Kanalrohrfahrzeug (1) nach einem der voranstehenden Ansprüche,
**dadurch gekennzeichnet,**
**dass** das Gehäuse (10) eine Beleuchtungseinrichtung (38) aufweist.

10. Selbstfahrendes Kanalrohrfahrzeug (1) nach Anspruch 9 ,
**dadurch gekennzeichnet,**
**dass** die Beleuchtungseinrichtung (38) im Gehäuse (10) angeordnet ist.

11. Selbstfahrendes Kanalrohrfahrzeug (1) nach Anspruch 9 oder 10,
**dadurch gekennzeichnet,**
**dass** die Kamera (30) im Bereich ihres Objektivs (35) die Beleuchtungseinrichtung (38) aufweist.

12. Selbstfahrendes Kanalrohrfahrzeug (1) nach einem der voranstehenden Ansprüche,
**dadurch gekennzeichnet,**
**dass** das Fensterelement (20) aus Glas oder durchsichtigem Kunststoff ausgebildet ist.

## Claims

1. A self-propelled sewer pipe vehicle (1), which is equipped with a camera,
**characterized in that**
the vehicle (1) has a support (2) with two parallel arms (3), wherein a casing (10) for receiving the camera (30) and a milling head are received by the arms (3), wherein the camera (30) is pivotable at least about a horizontal axis, the housing (10) is statically received by the support (2), wherein the camera (30) is mounted in the casing (10) so as to be rotatable relative to the casing about a horizontal axis (17), wherein the casing (10) has a window element (20) in the area of the camera objective (35) and wherein the casing has a cleaning device (40) for the window element (20).

2. The self-propelled sewer pipe vehicle (1) according to claim 1,
**characterized in that**
the window element (20) is ring-shaped.

3. The self-propelled sewer pipe vehicle (1) according to claim 1 or 2,
**characterized in that**
the casing (10) has two casing legs (12, 13) by which the ring-shaped window element (20) is held.

4. The self-propelled sewer pipe vehicle (1) according to one of the afore-mentioned claims,
**characterized in that**
the casing (10) has a chamber (15) for the electronic systems of the camera.

5. The self-propelled sewer pipe vehicle (1) according to one of the afore-mentioned claims,
**characterized in that**
the casing (10) has a cable connection casing (45) for cables (11) and the like.

6. The self-propelled sewer pipe vehicle (1) according to one of the afore-mentioned claims,
**characterized in that**
for the rotational movement of the camera (30) in the casing (10), a drive equipment (18, 18a, 19, 25) is provided, which is located inside the casing (10).

7. The self-propelled sewer pipe vehicle (1) according to claim 6,
**characterized in that**
the drive equipment comprises a drive motor (18).

8. The self-propelled sewer pipe vehicle (1) according to claim 7,
**characterized in that**
the drive motor (18) has a pinion (19) that is connected to a gear (25) disposed in the casing (10).

9. The self-propelled sewer pipe vehicle (1) according to one of the afore-mentioned claims,
**characterized in that**
the casing (10) has an illumination device (38).

10. The self-propelled sewer pipe device (1) according to claim 9,
**characterized in that**
the illumination device (38) is disposed in the casing (10).

11. The self-propelled sewer pipe device (1) according to claim 9 or 10,
**characterized in that**
the camera (30) has the illumination device (38) in the area of its objective (35).

12. The self-propelled sewer pipe device (1) according to one of the afore-mentioned claims,
**characterized in that**
the window element (20) is made of glass or transparent plastic material.

## Revendications

1. Véhicule autonome (1) pour un canal, ce véhicule étant équipé d'une caméra, **caractérisé en ce que** le véhicule (1) comporte un support (2) avec deux bras (3) parallèles, dans lequel les bras (3) portent un boîtier (10) pour loger la caméra (30) et une tête porte-fraise, dans lequel la caméra (30) est agencée pour pivoter au moins autour d'un axe horizontal, **en ce que** le boîtier (10) est maintenu fixe en position par le support (2), dans lequel la caméra (30) est montée dans le boîtier (10) de manière à pouvoir effectuer une rotation autour d'un axe horizontal (17) par rapport au boîtier (10), dans lequel le boîtier comporte un élément de fenêtre (20) dans le secteur de l'objectif de la caméra (35) et dans lequel le boîtier comprend une installation de nettoyage (40) pour l'élément de fenêtre (20).

2. Véhicule autonome (1) pour un canal selon la revendication 1,
**caractérisé en ce que**
l'élément de fenêtre (20) a une forme annulaire.

3. Véhicule autonome (1) pour un canal selon la revendication 1 ou 2,
**caractérisé en ce que**
le boîtier (10) comporte deux flasques (12, 13) qui maintiennent l'élément de fenêtre (20) de forme annulaire.

4. Véhicule autonome (1) pour un canal selon l'une des revendications précédentes,
**caractérisé en ce que**
le boîtier (10) comporte une chambre (15) pour l'électronique de la caméra.

5. Véhicule autonome (1) pour un canal selon l'une des revendications précédentes,
**caractérisé en ce que**
le boîtier (10) comporte une boîte de raccordement (45) par câble, pour un câble (11) ou similaire.

6. Véhicule autonome (1) pour un canal selon l'une des revendications précédentes,
**caractérisé en ce qu'un**
équipement d'entraînement (18, 18a, 19, 25) est prévu dans le boîtier (10) pour assurer le mouvement en rotation de la caméra (30) qui est logée dans le boîtier (10).

7. Véhicule autonome (1) pour un canal selon la revendication 6,
**caractérisé en ce que**
l'équipement d'entraînement comporte un moteur d'entraînement (18).

8. Véhicule autonome (1) pour un canal selon la revendication 7,
**caractérisé en ce que**
le moteur d'entraînement (18) comporte un pignon (19) qui est couplé avec une roue dentée (25) disposée sur le boîtier (10).

9. Véhicule autonome (1) pour un canal selon l'une des revendications précédentes,
**caractérisé en ce que**
le boîtier (10) comporte une installation d'éclairage (38).

10. Véhicule autonome (1) pour un canal selon la revendication 9,
**caractérisé en ce que**
l'installation d'éclairage (38) est montée dans le boîtier (10).

11. Véhicule autonome (1) pour un canal selon la revendication 9 ou 10,
**caractérisé en ce que**
la caméra (30) dispose de l'installation d'éclairage (38) dans le secteur de son objectif (35).

12. Véhicule autonome (1) pour un canal selon l'une des revendications précédentes,
**caractérisé en ce que**
l'élément de fenêtre (20) est réalisé en verre ou en un matériau synthétique transparent.
